# EUROPÄISCHE PATENTANMELDUNG

(11) **EP 4 465 470 A1**
(43) Veröffentlichungstag der Anmeldung: **20.11.2024**
(21) Anmeldenummer: 24163111.8
(22) Anmeldetag: 13.03.2024
(51) Int. Cl.: H02J 3/14, F24D 18/00, H02J 3/28, H02J 13/00

(54) **VERFAHREN ZUM VERTEILEN VON ELEKTRISCHER ENERGIE IN EINEM STROMNETZ SOWIE VORRICHTUNG HIERZU**

(30) Priorität: 16.05.2023 AT 503842023
(71) Anmelder: Ed-energiedigital GmbH, 8010 Graz (AT)
(72) Erfinder: Coss, Stefano, 8010 Graz (AT); Zobl, Andreas, 8010 Graz (AT); Rott, Eva, 8301 Laßnitzhöhe (AT); Zingl, Christian, 8242 Sankt Lorenzen am Wechsel (AT)
(74) Vertreter: Wirnsberger & Lerchbaum Patentanwälte OG

(57) **Zusammenfassung**

Die Erfindung betrifft ein Verfahren zum Verteilen von elektrischer Energie in einem Stromnetz (7), welches Stromnetz (7) zumindest einen Energieerzeuger (1), einen oder mehrere über eine Datenverbindung (6) mit dem Energieerzeuger (1) verbundene Energieverbraucher (2), welche Energiespeicher, insbesondere Warmwasserboiler (4), aufweisen, sowie Drittverbraucher aufweist, wobei eine durch den Energieerzeuger (1) zur Verfügung gestellte Energie und ein Energieverbrauch durch die verbundenen Energieverbraucher (2) mittels der Datenverbindung (6) abgeglichen werden, um einen Energieverbrauch durch die verbundenen Energieverbraucher (2) nach Möglichkeit durch den Energieerzeuger (1) zu decken. Um einen hohen Anteil der erzeugten Energie innerhalb der Energiegemeinschaft zur verbrauchen, ist erfindungsgemäß vorgesehen, dass dann, wenn eine Energieproduktion des Energieerzeugers (1) einen Energieverbrauch durch die verbundenen Energieverbraucher (2) übersteigt, ein oder mehrere Energiespeicher, insbesondere Warmwasserboiler (4), bei den verbundenen Energieverbrauchern (2) aktiviert werden, um überschüssige Energie in den Energiespeicher, insbesondere Warmwasserboilern (4), zu speichern.

Weiter betrifft die Erfindung eine Vorrichtung zum Verteilen von elektrischer Energie in einem Stromnetz (7) welches Stromnetz (7) zumindest einen Energieerzeuger (1), einen oder mehrere über eine Datenverbindung (6) mit dem Energieerzeuger (1) verbundene Energieverbraucher (2), welche Energiespeicher, insbesondere Warmwasserboiler (4), aufweisen, sowie Drittverbraucher aufweist, wobei eine durch den Energieerzeuger (1) zur Verfügung gestellte Energie und ein Energieverbrauch der Energieverbraucher (2) messbar und über die Datenverbindung (6) abgleichbar sind.

## Beschreibung

Die Erfindung betrifft ein Verfahren zum Verteilen von elektrischer Energie in einem Stromnetz, welches Stromnetz zumindest einen Energieerzeuger, einen oder mehrere über eine Datenverbindung mit dem Energieerzeuger verbundene Energieverbraucher, welche Energiespeicher, insbesondere Warmwasserboiler, aufweisen, sowie Drittverbraucher aufweist, wobei eine durch den Energieerzeuger zur Verfügung gestellte Energie und ein Energieverbrauch durch die verbundenen Energieverbraucher mittels der Datenverbindung abgeglichen werden, um einen Energieverbrauch durch die verbundenen Energieverbraucher nach Möglichkeit durch den Energieerzeuger zu decken.

Weiter betrifft die Erfindung eine Vorrichtung zum Verteilen von elektrischer Energie in einem Stromnetz, welches Stromnetz zumindest einen Energieerzeuger, einen oder mehrere über eine Datenverbindung mit dem Energieerzeuger verbundene Energieverbraucher, welche Energiespeicher, insbesondere Warmwasserboiler, aufweisen, sowie Drittverbraucher aufweist, wobei eine durch den Energieerzeuger zur Verfügung gestellte Energie und ein Energieverbrauch der Energieverbraucher messbar und über die Datenverbindung abgleichbar sind.

Energiegemeinschaften sind aus dem Stand der Technik bekannt geworden, um Energieerzeuger, insbesondere Eigentümer von Photovoltaikanlagen, mit Energieverbrauchern, insbesondere Konsumenten, also Inhaber von beispielsweise Einfamilienhäusern oder Wohnungen, miteinander zu vernetzen, sodass erzeugte elektrische Energie untereinander geteilt und automatisiert verrechnet werden kann. Dies hat insbesondere den Vorteil, dass die Eigentümer der Photovoltaikanlagen für die elektrische Energie einen höheren Preis als am freien Markt erhalten und gleichzeitig die Energieverbraucher einen geringeren Preis für die elektrische Energie als am freien Markt bezahlen, da ein Umweg über Dritte, insbesondere Energieversorgungsunternehmen, vermieden werden kann.

Dabei sind die Energieerzeuger mit den Energieverbrauchern über eine digitale Plattform, in der Regel eine cloud-basierte Datenverarbeitungseinrichtung, verbunden, wobei die verbundenen Energieverbraucher aktuell verbrauchte Energie einmelden und diese mit aktuell erzeugter Energie der Energieerzeuger abgeglichen wird.

Übersteigt die von dem oder den Energieerzeugern bereitgestellte Energie einen Energiebedarf der verbundenen Energieerzeuger, wird elektrische Energie an Drittverbraucher abgegeben, wobei üblicherweise ein Zwischenhändler wie ein Energieversorgungsunternehmen eingeschaltet werden muss, wodurch ein geringerer Energiepreis erwirtschaftet werden kann.

Umgekehrt beziehen die verbundenen Energieverbraucher dann Energie bzw. elektrische Leistung aus dem Stromnetz, wenn der Energie- bzw. Leistungsbedarf der verbundenen Energieverbraucher die durch die Energieerzeuger bereitgestellte Energie bzw. Leistung übersteigt, wobei diese für die aus dem Stromnetz bereitgestellte elektrische Energie üblicherweise einen höheren Preis bezahlen müssen.

Somit ist es bei Energiegemeinschaften wünschenswert, dass die durch den oder die Energieerzeuger bereitgestellte elektrische Leistung bzw. Energie möglichst genau dem Energie- bzw. Leistungsbedarf der verbundenen Energieverbraucher entspricht.

Es hat sich nun jedoch gezeigt, dass bei den bei Energiegemeinschaften bekannten Verfahren zum Verteilen elektrischer Energie vergleichsweise häufig elektrische Energie an Drittverbraucher abgegeben bzw. vom Stromnetz bezogen werden muss.

Hier setzt die Erfindung an. Aufgabe der Erfindung ist es, ein Verfahren der eingangs genannten Art anzugeben, bei welchem ein höherer Anteil der von den verbundenen Energieverbrauchern verbrauchten Energie durch die Energieerzeuger erzeugt wird und weniger Energie durch Dritte über das Stromnetz bezogen werden muss.

Weiter soll eine Vorrichtung der eingangs genannten Art angegeben werden, mit welcher Energie besser innerhalb von Teilnehmern einer Energiegemeinschaft verteilbar ist.

Die erste Aufgabe wird erfindungsgemäß durch ein Verfahren der eingangs genannten Art gelöst, bei welchem dann, wenn eine Energieproduktion des Energieerzeugers einen Energieverbrauch durch die verbundenen Energieverbraucher übersteigt, ein oder mehrere Energiespeicher, insbesondere Warmwasserboiler, bei den verbundenen Energieverbrauchern aktiviert werden, um überschüssige Energie in den Energiespeichern, insbesondere Warmwasserboilern, zu speichern. Auf diese Weise kann somit der aktuelle Energie- bzw. Leistungsverbrauch der verbundenen Energieverbraucher besser an die durch den oder die Energieerzeuger zur Verfügung gestellte Leistung angepasst werden, wodurch ein höherer Anteil der innerhalb der Energiegemeinschaften erzeugten Energie auch innerhalb der Energiegemeinschaften verbraucht werden kann.

Im Rahmen der Erfindung wurde erkannt, dass insbesondere Warmwasserboiler, welche in aller Regel elektrisch beheizbar und in nahezu jedem Haushalt vorhanden sind, auch in Energiegemeinschaften dazu genutzt werden können, Energieangebot und Energienachfrage in Einklang zu bringen bzw. eine Lücke zwischen Energieangebot und Energienachfrage zu verkleinern, indem überschüssige elektrische Energie bzw. Leistung in Form von thermischer Energie in den Warmwasserboilern gespeichert wird. Als Energieproduktion wird hier die durch den Energieerzeuger erzeugte elektrische Energie bzw. aktuelle elektrische Leistungsabgabe des Energieerzeugers verstanden.

Gemäß dem Stand der Technik werden Warmwasserboiler üblicherweise in der Nacht aufgeheizt, was historisch durch einen günstigeren Nachtstrom bedingt ist, jedoch nunmehr keine rationale Grundlage mehr hat. Erfindungsgemäß wird der Warmwasserboiler nun nicht mehr automatisiert in der Nacht aufgeheizt, sondern dann, wenn ein Energieüberschuss innerhalb der Energiegemeinschaft vorliegt, was bei in der Regel durch Photovoltaikanlagen gebildeten Energieerzeugern üblicherweise nicht während der Nacht der Fall ist.

Somit kann mit einer äußerst einfachen Maßnahme, dem Aktivieren des Warmwasserboilers bei Energie- bzw. Leistungsüberschuss, der Energieverbrauch besser an die zur Verfügung gestellte elektrische Energie innerhalb der Energiegemeinschaft angepasst werden und muss weniger Energie an Drittverbraucher abgegeben bzw. durch das Stromnetz bezogen werden.

Neben Warmwasserboilern können natürlich alle weiteren Energiespeicher im erfindungsgemäßen Verfahren eingesetzt werden, insbesondere Batterien, wie beispielsweise Lithium-Eisenphosphat-Batterien, Handy- oder Laptopakkus, Batterien, die in Elektroautos eingesetzt sind und dergleichen. Bei elektrischer Beheizung eines Hauses oder einer Wohnung, insbesondere mittels einer Wärmepumpe, kann auch eine Heizung aktiviert werden, um thermische Energie beispielsweise in einer Betondecke bzw. einem Betonkern zu speichern und somit den Leistungsverbrauch an das Leistungsangebot anzupassen.

Bevorzugt ist vorgesehen, dass zumindest ein Energiespeicher als Warmwasserboiler ausgebildet ist und kontinuierlich eine Wassertemperatur und/oder ein Füllstand der Warmwasserboiler gemessen werden und eine Aktivierung einzelner Warmwasserboiler abhängig von Wassertemperatur und/oder Füllstand erfolgt.

Es kann vorgesehen sein, dass abhängig von einem Energieüberschuss ein oder mehrere Speicher, insbesondere Warmwasserboiler, für einen Teil eines vordefinierten Zeitintervalles, insbesondere eines 15-Minutenintervalles, insbesondere für ein Drittel oder zwei Drittel des Zeitintervalles, aktiviert werden. Somit kann der jeweilige Speicher mit Teillast bzw. moduliert betrieben werden, obwohl bestimmte Speicher, insbesondere Warmwasserboiler, grundsätzlich keine Teillast erlauben, sondern lediglich ein- oder ausgeschaltet werden können. Entsprechend kann auch ein vergleichsweise geringer Energieüberschuss innerhalb der Energiegemeinschaft genutzt werden. Ein Zeitintervall von 15 Minten ist besonders bevorzugt, zumal innerhalb von Energiegemeinschaften Leistungsüberschüsse und Leistungsverbräuche üblicherweise in Fünfzehnminutenintervallen eingemeldet und abgerufen werden. Entsprechend kann beispielsweise ein Warmwasserboiler, der fünf von 15 Minuten aktiviert wird, innerhalb des 15-Minutenintervalls als zu 1/3 aktiviert betrachtet werden. Es versteht sich, dass grundsätzlich auch mit wesentlich kleineren Teilungen moduliert werden kann, beispielsweise können Energiespeicher nur für einzelnen Sekunden innerhalb eines 15-Minutenintervalls aktiviert werden, um einen dem Leistungsangebot entsprechenden Leistungsverbrauch zu erreichen.

Günstig ist es, dass dann, wenn eine Energieproduktion des Energieerzeugers einen Energieverbrauch durch die Energieverbraucher übersteigt, ein oder mehrere Energiespeicher, insbesondere Warmwasserboiler bei den verbundenen Energieverbrauchern abhängig von einem aktuellen Speicherzustand, insbesondere einer aktuellen Wassertemperatur, aktiviert werden, wobei insbesondere zunächst jene Energiespeicher, insbesondere Warmwasserboiler aktiviert werden, bei welchen ein aktueller Speicherzustand, insbesondere eine aktuelle Wassertemperatur einen definierten Grenzwert unterschreitet.

Die Aktivierung der Warmwasserboiler, also ein elektrisches Aufheizen von in den Warmwasserboilern befindlichem Wasser, erfolgt bevorzugt über eine zentrale Datenverarbeitungseinrichtung, insbesondere einen Server in einer Cloud, in welchem Daten zu verfügbarer und benötigter Energie sowie zu Temperaturen und Füllständen der Warmwasserboilern zusammengeführt werden.

Die Aktivierung abhängig von der Wassertemperatur kann beispielsweise automatisiert erfolgen, indem ein im Warmwasserboiler vorhandenes Thermostat genutzt wird, welches einen elektrischen Heizstab im Warmwasserboiler dann aktiviert, wenn eine Wassertemperatur einen definierten Schwellwert unterschreitet. Alternativ oder ergänzend kann es natürlich auch vorgesehen sein, dass die Wassertemperatur kontinuierlich gemessen und an eine Datenverarbeitungseinrichtung übermittelt wird, durch welche dann jene Warmwasserboiler zunächst aktiviert werden, welche eine niedrigste Temperatur aufweisen.

Es kann vorgesehen sein, dass ein oder mehrere Energiespeicher, insbesondere Warmwasserboiler deaktiviert werden, wenn die Energieproduktion des Energieerzeugers den Energieverbrauch durch die verbundenen Energieverbraucher nicht mehr deckt. Analog zur Einspeicherung elektrischer Energie bei einem Energieüberschuss kann im umgekehrten Fall, wenn eine Energieproduktion nicht ausreicht, um den aktuellen Energieverbrauch zu decken, vorgesehen sein, dass Warmwasserboiler deaktiviert werden, um einen Energieverbrauch bzw. eine Leistungsaufnahme der Energieverbraucher zu reduzieren. Dies kann insbesondere dann der Fall sein, wenn ein Wasser im Warmwasserboiler eine bestimmte Schwelltemperatur überschreitet, sodass die Warmwasserversorgung bei den Energieverbrauchern weiterhin sichergestellt ist, sodass die Deaktivierung von Warmwasserboilern abhängig von aktueller Wassertemperatur und/oder Füllstand erfolgen kann. Auch die Deaktivierung der Warmwasserboiler kann wie die Aktivierung zentral, gegebenenfalls in einer zentralen Datenverarbeitungseinrichtung, oder lokal bei den Energieverbrauchern selbst erfolgen.

In dem Zusammenhang kann es günstig sein, dass Energiespeicher, insbesondere Warmwasserboiler abhängig von einem definierten Mindestfüllstand, insbesondere einer definierten Mindesttemperatur deaktiviert werden, wenn die Energieproduktion des Energieerzeugers den Energieverbrauch durch die verbundenen Energieverbraucher nicht mehr deckt, wobei insbesondere zunächst jene Energiespeicher, insbesondere Warmwasserboiler deaktiviert werden, bei welchen eine aktuelle Wassertemperatur den Mindestfüllstand, insbesondere die Mindesttemperatur, überschreitet. Somit ist sichergestellt, dass keine Energie aus dem Stromnetz zugekauft werden muss, wobei gleichzeitig eine Warmwasserversorgung gewährleistet ist. Es versteht sich, dass bei Unterschreiten der Mindesttemperatur üblicherweise der Warmwasserboiler aktiviert wird, um eine Warmwasserversorgung sicherzustellen. In dem Fall kann auch Energie aus dem Stromnetz bezogen werden, wodurch zwar höhere Kosten anfallen, jedoch weiterhin Warmwasser verfügbar ist.

In der Regel ist vorgesehen, dass der Energieverbrauch durch die Energieverbraucher durch Ausleseeinrichtungen an Smart-Metern an den Energieverbrauchern erfasst und von den Ausleseeinrichtungen an eine zentrale Datenverarbeitungseinrichtung übertragen wird, mit welcher Datenverarbeitungseinrichtung das Verfahren gesteuert wird. Somit kann zentral eine Steuerung von Energieverbrauchern und Energieerzeugern anhand des aktuell erzeugten und verbrauchten elektrischen Stroms bzw. der erzeugten und verbrauchten elektrischen Energie erfolgen. Üblicherweise sind auch an dem oder den Energieerzeugern Smart-Meter vorgesehen, um einen Eigenbedarf der Energieerzeuger berücksichtigen zu können. Smart-Meter können beispielsweise mit gesonderten Ausleseeinrichtungen bzw. Readern ausgelesen und entsprechende Daten, welche vom Smart-Meter üblicherweise an einen Energieversorger übermittelt werden, von der Ausleseeinrichtung an die Datenverarbeitungseinrichtung übermittelt werden.

Um die bereitgestellte elektrische Energie kontinuierlich zu erfassen, ist es günstig, wenn die durch den zumindest einen Energieerzeuger zur Verfügung gestellte elektrische Energie durch einen Wechselrichter des Energieerzeugers bekannt gegeben wird. Grundsätzlich könnte eine Aktivierung bzw. Deaktivierung der Warmwasserboiler bei den verbundenen Energieverbrauchern über die Datenverbindung durch den Energieerzeuger oder durch die Energieverbraucher selbst erfolgen. Besonders günstig ist es jedoch, wenn eine zentrale Datenverarbeitungseinrichtung vorgesehen ist, durch welche eine Aktivierung der Energiespeicher, insbesondere der Warmwasserboiler erfolgt. Eine derartige zentrale Datenverarbeitungseinrichtung kann beispielsweise ein Server sein, welcher über das Internet mit sämtlichen Energieverbrauchern und Energieerzeugern, insbesondere mit Wechselrichtern von Photovoltaikanlagen, sowie mit Smart-Metern von Energieverbrauchern verbunden ist, um die einzelnen Warmwasserboiler abhängig von der gegenwärtig verfügbaren und verbrauchten Energie zu aktivieren bzw. zu deaktivieren. Gegebenenfalls kann auch eine Ausleseeinrichtung für den Wechselrichter vorgesehen sein, welche mit der zentralen Datenverarbeitungseinrichtung verbunden ist, sodass der Wechselrichter selbst nicht zur Kommunikation mit der Datenverarbeitungseinrichtung ausgebildet sein muss.

Üblicherweise ist vorgesehen, dass die Energiespeicher, insbesondere Warmwasserboiler, durch den Energiespeichern, insbesondere Warmwasserboilern, zugeordnete Schaltelemente aktiviert werden, wobei die Schaltelemente einen schaltbaren elektrischen Kontakt sowie ein Datenmodem aufweisen und mit den Energieerzeugern und Energieverbrauchern durch eine Datenverbindung, insbesondere eine drahtlose Datenverbindung über ein Internet, verbunden sind. Auf diese Weise können bestehende Anlagen, insbesondere Wohnungen oder Häuser, sehr einfach für die Verwendung in einem entsprechenden Verfahren nachgerüstet werden, indem nämlich einfach der Warmwasserboiler über entsprechende Schaltelemente mit elektrischer Energie versorgt bzw. gesteuert wird. Somit ist es ohne kostenintensiven Umbau einfach möglich, ein entsprechendes Verfahren umzusetzen bzw. Teil entsprechender Energiegemeinschaften zu werden.

Die weitere Aufgabe wird erfindungsgemäß durch eine Vorrichtung der eingangs genannten Art gelöst, welche ein mit einer Datenverarbeitungseinrichtung, welche mit dem Energieerzeuger und dem zumindest einen Energieverbraucher verbunden ist, verbindbares Schaltelement aufweist, durch welches der Energiespeicher, insbesondere der Warmwasserboiler aktivierbar ist, um dann, wenn eine Energieproduktion des Energieerzeugers den Energieverbrauch durch die Energieverbraucher übersteigt, den Energiespeicher, insbesondere den Warmwasserboiler bei den verbundenen Energieverbrauchern aktivieren zu können, sodass überschüssige elektrische Energie in eine andere Energieform, insbesondere in thermische Energie, umgewandelt und bei den Energieverbrauchern gespeichert werden kann, um den aktuellen Energieverbrauch durch die verbundenen Energieverbraucher an die durch den Energieerzeuger zur Verfügung gestellte Energie anzupassen.

Üblicherweise wird eine derartige Vorrichtung zur Durchführung eines erfindungsgemäßen Verfahrens eingesetzt und ist entsprechend hierzu ausgebildet.

Das Schaltelement ist zur Herstellung einer Datenverbindung mit der Datenverarbeitungseinrichtung ausgebildet, üblicherweise zur Herstellung einer drahtlosen Datenverbindung.

Günstig ist es, wenn das Schaltelement über eine bidirektionale Datenverbindung mit der Datenverarbeitungseinrichtung verbindbar ist. Es kann dann nicht nur durch die Datenverarbeitungseinrichtung das Schaltelement geschaltet werden, sondern kann über die Datenverbindung mittels der Datenverarbeitungseinrichtung regelmäßig ein aktueller Zustand des Schaltelementes, insbesondere offen oder geschlossen, abgefragt werden, um die in den Warmwasserboilern speicherbare Energiemenge berechnen zu können. Hierzu können in den Warmwasserboilern auch Sensoren zur Erfassung von Temperatur und/oder Füllstand vorgesehen sein.

Es hat sich bewährt, dass das Schaltelement ein Modem für eine drahtlose Datenverbindung mit der Datenverarbeitungseinrichtung aufweist. Das Schaltelement kann dann beispielsweise sehr einfach nachgerüstet und einfach zwischen einem Warmwasserboiler und einem Stromnetz geschaltet werden, bzw. der Warmwasserboiler über das Schaltelement mit elektrischem Strom verbunden werden, sodass der Warmwasserboiler durch das Schaltelement ein- bzw. ausgeschalten werden kann.

Günstig ist es, wenn das Schaltelement einen Schacht zur Aufnahme einer Sim-Karte oder eine fix eingelötete aufweist. Es ist kann dann eine Kommunikation mit anderen Teilnehmern der Energiegemeinschaft bzw. einer zentralen Datenverarbeitungseinrichtung unabhängig von einem Netzwerk im Haushalt wie einem WLAN erfolgen, sondern kann das Schaltelement eine direkte Datenverbindung beispielsweise über ein Mobilfunknetz mit der Datenverarbeitungseinrichtung herstellen.

Bevorzugt ist vorgesehen, dass eine Ausleseeinrichtung für ein Smart-Meter vorgesehen ist, welche mit der Datenverarbeitungseinrichtung verbindbar ist, um einen aktuellen Energieverbrauch eines Energieerzeugers, an welchem das Smart-Meter installiert ist, an die Datenverarbeitungseinrichtung übermitteln zu können. Die Datenverarbeitungseinrichtung, in aller Regel ein cloud-basierter Server, kann dann regelmäßig Daten zu verfügbarer und verbrauchter Energie bzw. Leistung abfragen, um Energieverbrauch und Energieangebot aufeinander abgleichen bzw. Warmwasserboiler entsprechend zu- bzw. wegschalten zu können. Die Ausleseeinrichtung ist somit üblicherweise derart ausgebildet, dass diese einfach an ein bestehendes Smart-Meter, welches in der Regel von einem Energieversorgungsunternehmen bereitgestellt wird, angekoppelt werden kann, um das Smart-Meter auszulesen und Daten in Bezug auf eine aktuell abgerufene Leistung an die Datenverarbeitungseinrichtung zu übermitteln. Entsprechend stehen an der Datenverarbeitungseinrichtung aktuelle Daten zu Leistungsaufnahmen der einzelnen Energieverbraucher stets in Echtzeit zur Verfügung.

Günstig ist es, wenn ein Energieerzeuger mit einer Photovoltaikanlage vorgesehen ist, wobei ein Wechselrichter der Photovoltaikanlage mit der Datenverarbeitungseinrichtung verbindbar bzw. verbunden ist.

Grundsätzlich kann die erfindungsgemäße Vorrichtung bzw. das erfindungsgemäße Verfahren natürlich für Energieerzeuger jeglicher Art eingesetzt werden. Insbesondere aufgrund der zunehmenden Verbreitung von Photovoltaikanlagen bei Wohnhäusern und Einfamilienhäusern ist es jedoch bevorzugt, dass die Erfindung in Verbindung mit Photovoltaikanlagen eingesetzt wird. Entsprechend weist die Vorrichtung bevorzugt eine Photovoltaikanlage auf, wobei ein Wechselrichter der Photovoltaikanlage mit der zentralen Datenverarbeitungseinrichtung verbunden ist, um eine aktuell zur Verfügung gestellte elektrische Energie bzw. eine abgegebene Leistung der Photovoltaikanlage einmelden zu können.

Günstig ist es, wenn die Datenverarbeitungseinrichtung vorgesehen und zur Aktivierung und Deaktivierung von einem oder mehreren Energiespeichern, insbesondere Warmwasserboilern des zumindest einen Energieverbrauchers über die Datenverbindung mit einem oder mehreren Schaltelementen verbunden ist, welche mit jeweils zumindest einem Energiespeicher, insbesondere Warmwasserboiler verbunden ist, um die Energiespeicher, insbesondere Warmwasserboiler zu aktivieren und zu deaktivieren, in der Regel abhängig von der durch den oder die Energieerzeuger zur Verfügung gestellten elektrischen Energie bzw. Leistung, sodass bei einem Energie- bzw. Leistungsüberschuss Warmwasserboiler aktiviert und bei einer Unterdeckung der durch die verbundenen Energieverbrauchter benötigten Energie Warmwasserboiler deaktiviert werden können. Bevorzugt ist die Datenverarbeitungseinrichtung auch mit Sensoren in den Warmwasserboilern verbunden, durch welche Wassertemperatur und/oder Füllstand der Warmwasserboiler messbar sind, sodass abhängig von Wassertemperatur und/oder Füllstand und Verhältnis von zur Verfügung gestellter und benötigter Leistung bzw. Energie einzelne Warmwasserboiler aktiviert bzw. deaktiviert werden können.

Bevorzugt ist in zumindest einem Energiespeicher, insbesondere einem Warmwasserboiler ein Sensor zur Temperatur- und/oder Füllstandsmessung vorgesehen und mit der Datenverarbeitungseinrichtung verbunden, um basierend auf Temperatur und/oder Füllstand einzelne Energiespeicher, insbesondere Warmwasserboiler aktivieren bzw. deaktivieren zu können.

Weitere Merkmale, Vorteile und Wirkungen der Erfindung ergeben sich anhand des nachfolgend dargestellten Ausführungsbeispiels. In der Zeichnung, auf welche dabei verwiesen wird, zeigt:

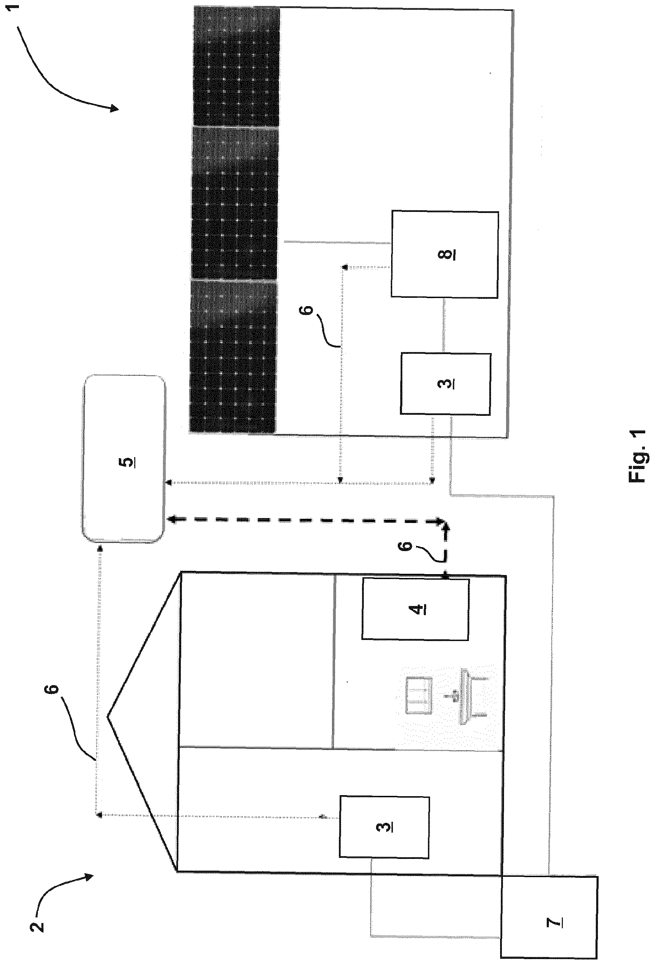

Fig. 1 ein Schema einer Vorrichtung zur Durchführung eines erfindungsgemäßen Verfahrens.

Fig. 1 zeigt ein Schema einer Vorrichtung zur Durchführung eines erfindungsgemäßen Verfahrens innerhalb einer Energiegemeinschaft. Ersichtlich ist dabei ein Energieerzeuger 1, beispielsweise ein Einfamilienhaus, welches eine Photovoltaikanlage mit Photovoltaikmodulen und einem Wechselrichter 8 aufweist. Darüber hinaus ist ein hier ebenfalls durch ein Einfamilienwohnhaus gebildeter Energieverbraucher 2 dargestellt, welches Einfamilienwohnhaus einen Warmwasserboiler 4 aufweist. Energieverbraucher 2 und Energieerzeuger 1 sind durch ein Stromnetz 7 verbunden. Mit dem Stromnetz 7 sind darüber hinaus auch weitere Erzeuger und Verbraucher bzw. Drittverbraucher von elektrischer Energie verbunden, welcher hier nicht dargestellt sind.

In einem Zähler des Einfamilienhauses sowie in einem Zähler des Hauses, welches die Photovoltaikanlage aufweist, sind jeweils Smart-Meter 3 angeordnet, um einen aktuellen Energieverbrauch bzw. Stromverbrauch an eine zentrale Datenverarbeitungseinrichtung 5 weiterleiten zu können, welche beispielsweise in einer Cloud angeordnet ist. Die Smart-Meter 3 können hierzu grundsätzlich selbst mit einer entsprechenden Einrichtung zur Herstellung einer Datenverbindung 6 mit der zentralen Datenverarbeitungseinrichtung 5 ausgebildet sein. Um herkömmliche Smart-Meter 3, die von Energieversorgungsunternehmen bereitgestellt werden, einsetzen zu können, ist üblicherweise eine Ausleseeinrichtung vorgesehen, durch welche ein herkömmliches Smart-Meter 3 ausgelesen werden kann, wobei die Ausleseeinrichtung eine Einrichtung zur Herstellung einer Datenverbindung 6 mit der zentralen Datenverarbeitungseinrichtung 5, insbesondere ein Modem, aufweist. Somit kann die zentrale Datenverarbeitungseinrichtung 5 in Echtzeit mit Daten aus dem Smart-Meter 3 versorgt werden, um einen aktuellen Leistungsbedarf in die Steuerung des Verfahrens einfließen lassen zu können.

Weiter ist der Wechselrichter 8 der Photovoltaikanlage mit der Datenverarbeitungseinrichtung 5 verbunden, sodass die Datenverarbeitungseinrichtung 5 Informationen sowohl zum Energieverbrauch als auch zum Energieangebot kontinuierlich vorliegen hat.

Um überschüssige Energie innerhalb der Energiegemeinschaft verbrauchen bzw. speichern zu können, sind erfindungsgemäß an den Warmwasserboilern 4 der Energieverbraucher 2 der Energiegemeinschaft jeweils nicht gesondert dargestellte Schaltelemente vorgesehen, welche über eine bidirektionale Datenverbindung 6 mit der Datenverarbeitungseinrichtung 5 verbunden sind. Somit können die Warmwasserboiler 4, hier ist ein einziger Warmwasserboiler 4 dargestellt, über das bzw. die Schaltelemente aktiviert bzw. deaktiviert werden, um einen Energieverbrauch an ein Energieangebot anpassen und möglichst wenig Energie an Drittverbraucher abgeben bzw. aus dem Stromnetz 7 beziehen zu müssen. Über die Möglichkeit, den Warmwasserboiler nur für einen Teil eines Zeitintervalles, insbesondere eines 15-Minutenintervalles, innerhalb welchen Intervalles üblicherweise eine Verrechnung von hergestellter und abgerufener Energie innerhalb der Energiegemeinschaft erfolgt, zu aktivieren, kann verrechnungstechnisch auch eine Teillast des Warmwasserspeichers realisiert werden, selbst wenn dieser grundsätzlich nur ein- und ausgeschaltet werden kann.

Die Warmwasserboiler 4 werden somit automatisiert über die Schaltelemente aktiviert bzw. deaktiviert, sodass ein Überschuss an elektrischer Energie in thermische Energie in den Warmwasserboilern 4 gespeichert werden kann. Im Gegensatz zum "dummen Laden" in der Nacht wird der Speicher somit mit günstigem Strom aus der Energiegemeinschaft geladen.

An den Warmwasserboilern 4 sind darüber hinaus Sensoren zur Temperatur- und/oder Füllstandsmessung vorgesehen, welche Daten über die bevorzugt bidirektionale Datenverbindung 6, über welche die Schaltelemente mit der zentralen Datenverarbeitungseinrichtung 5 verbunden sind, mit der zentralen Datenverarbeitungseinrichtung 5 ausgetauscht werden können, sodass durch die zentrale Datenverarbeitungseinrichtung 5, beispielsweise einen Server in einer Cloud-Umgebung, gezielt einzelne Warmwasserboiler 4 über zugeordnete Schaltelemente abhängig von Wassertemperatur und/oder Füllstand aktiviert bzw. deaktiviert werden können.

Aufgrund dieses erfindungsgemäßen Aktivierens bzw. Deaktivierens der Warmwasserboiler 4 abhängig von einer verfügbaren Energiemenge ist es insbesondere möglich, eine Warmwasseraufbereitung, welche etwa 50 % eines Gesamtenergiebedarfs einer Wohnung bzw. eines Hauses verursacht, marktkonform zu dekarbonisieren. Im Unterschied zu herkömmlichen Smarthome-Lösungen wird hier eine gebäudeübergreifende Optimierung der Lasten durch das Energiegemeinschaftsmodell durchgeführt und somit auch unabhängig von einem Energielieferanten.

Das Schaltelement, welches die einzelnen Warmwasserboiler 4 aktiviert bzw. deaktiviert, ist über eine Datenverbindung 6 bzw. insbesondere über eine Mobilfunkverbindung mit der Datenverarbeitungseinrichtung 5 und somit auch mit den Wechselrichtern 8 der Energieerzeuger 1 mittelbar verbunden und weist üblicherweise einen Schacht für eine Sim-Karte oder eine fix eingelötete Sim-Karte auf, sodass das Schaltmodul unabhängig von einem Netzwerk des Hauses, in welchem das Schaltmodul angeordnet ist, mit der Datenverarbeitungseinrichtung 5 kommunizieren kann, wodurch eine Nachrüstung bestehender Anlagen besonders einfach möglich ist.

Die Eigenverbrauchsoptimierung von Warmwasserspeichern bzw. Warmwasserboilern 4 in Energiegemeinschaften kann dazu beitragen, den Eigenverbrauch von erzeugtem Solar-, Wasser- oder Windstrom in der Energiegemeinschaft zu maximieren.

Wenngleich im Ausführungsbeispiel eine Umsetzung der Erfindung mit einem Warmwasserboiler 4 gezeigt ist, versteht es sich, dass das Verfahren auch mit anderen Energiespeichern umgesetzt werden kann, insbesondere mit Batterien oder Teilen eines Bauwerkes, die elektrisch aufgeheizt werden, um Energie thermisch zu speichern.

Mit einem erfindungsgemäßen Verfahren und einer erfindungsgemäßen Vorrichtung ist eine Optimierung der Energienutzung innerhalb von Energiegemeinschaften daher auf besonders einfache und gleichzeitig effektive Weise möglich.

## Patentansprüche

1. Verfahren zum Verteilen von elektrischer Energie in einem Stromnetz (7), welches Stromnetz (7) zumindest einen Energieerzeuger (1), einen oder mehrere über eine Datenverbindung (6) mit dem Energieerzeuger (1) verbundene Energieverbraucher (2), welche Energiespeicher, insbesondere Warmwasserboiler (4), aufweisen, sowie Drittverbraucher aufweist, wobei eine durch den Energieerzeuger (1) zur Verfügung gestellte Energie und ein Energieverbrauch durch die verbundenen Energieverbraucher (2) mittels der Datenverbindung (6) abgeglichen werden, um einen Energieverbrauch durch die verbundenen Energieverbraucher (2) nach Möglichkeit durch den Energieerzeuger (1) zu decken, **dadurch gekennzeichnet, dass** dann, wenn eine Energieproduktion des Energieerzeugers (1) einen Energieverbrauch durch die verbundenen Energieverbraucher (2) übersteigt, ein oder mehrere Energiespeicher, insbesondere Warmwasserboiler (4), bei den verbundenen Energieverbrauchern (2) aktiviert werden, um überschüssige Energie in den Energiespeichern, insbesondere Warmwasserboilern (4), zu speichern.

2. Verfahren nach Anspruch 1, **dadurch gekennzeichnet, dass** zumindest ein Energiespeicher als Warmwasserboiler (4) ausgebildet ist und kontinuierlich eine Wassertemperatur und/oder ein Füllstand der Warmwasserboiler (4) gemessen werden und eine Aktivierung einzelner Warmwasserboiler (4) abhängig von Wassertemperatur und/oder Füllstand erfolgt.

3. Verfahren nach Anspruch 1 oder 2, **dadurch gekennzeichnet, dass** abhängig von einem Energieüberschuss ein oder mehrere Speicher, insbesondere Warmwasserboiler (4), für einen Teil eines vordefinierten Zeitintervalles, insbesondere eines 15-Minutenintervalles, insbesondere für ein Drittel oder zwei Drittel des Zeitintervalles, aktiviert werden.

4. Verfahren nach Anspruch 1 oder 3, **dadurch gekennzeichnet, dass** dann, wenn eine Energieproduktion des Energieerzeugers (1) einen Energieverbrauch durch die Energieverbraucher (2) übersteigt, ein oder mehrere Energiespeicher, insbesondere Warmwasserboiler (4), bei den verbundenen Energieverbrauchern (2) abhängig von einem aktuellen Speicherzustand, insbesondere einer aktuellen Wassertemperatur, aktiviert werden, wobei insbesondere zunächst jene Energiespeicher, insbesondere Warmwasserboiler (4), aktiviert werden, bei welchen ein aktueller Speicherzustand, insbesondere eine aktuelle Wassertemperatur, einen definierten Grenzwert unterschreitet.

5. Verfahren nach einem der Ansprüche 1 bis 4, **dadurch gekennzeichnet, dass** ein oder mehrere Energiespeicher, insbesondere Warmwasserboiler (4), deaktiviert werden, wenn die Energieproduktion des Energieerzeugers (1) den Energieverbrauch durch die verbundenen Energieverbraucher (2) nicht mehr deckt.

6. Verfahren nach Anspruch 5, **dadurch gekennzeichnet, dass** Energiespeicher, insbesondere Warmwasserboiler (4), abhängig von einem definierten Mindestfüllstand, insbesondere einer definierten Mindesttemperatur, deaktiviert werden, wenn die Energieproduktion des Energieerzeugers (1) den Energieverbrauch durch die verbundenen Energieverbraucher (2) nicht mehr deckt, wobei insbesondere zunächst jene Energiespeicher, insbesondere Warmwasserboiler (4), deaktiviert werden, bei welchen eine aktuelle Wassertemperatur den Mindestfüllstand, insbesondere die Mindesttemperatur, überschreitet.

7. Verfahren nach einem der Ansprüche 1 bis 6, **dadurch gekennzeichnet, dass** der Energieverbrauch durch die Energieverbraucher (2) durch Ausleseeinrichtungen an Smart-Metern (3) an den Energieverbrauchern (2) erfasst und von den Ausleseeinrichtungen an eine zentrale Datenverarbeitungseinrichtung (5) übertragen wird, mit welcher Datenverarbeitungseinrichtung (5) das Verfahren gesteuert wird.

8. Verfahren nach einem der Ansprüche 1 bis 7, **dadurch gekennzeichnet, dass** die durch den zumindest einen Energieerzeuger (1) zur Verfügung gestellte elektrische Energie durch einen Wechselrichter (8) des Energieerzeugers (1) bekannt gegeben wird.

9. Verfahren nach einem der Ansprüche 1 bis 8, **dadurch gekennzeichnet, dass** eine zentrale Datenverarbeitungseinrichtung (5) vorgesehen ist, durch welche eine Aktivierung der Energiespeicher, insbesondere der Warmwasserboiler (4), erfolgt.

10. Verfahren nach einem der Ansprüche 1 bis 9, **dadurch gekennzeichnet, dass** die Energiespeicher, insbesondere Warmwasserboiler (4), durch den Energiespeichern, insbesondere Warmwasserboilern (4), zugeordnete Schaltelemente aktiviert werden, wobei die Schaltelemente einen schaltbaren elektrischen Kontakt sowie ein Datenmodem aufweisen und mit den Energieerzeugern (1) und Energieverbrauchern (2) durch eine Datenverbindung (6), insbesondere eine drahtlose Datenverbindung (6) über ein Internet, verbunden sind.

11. Vorrichtung zum Verteilen von elektrischer Energie in einem Stromnetz (7), insbesondere zur Durchführung eines Verfahrens nach einem der Ansprüche 1 bis 10, welches Stromnetz (7) zumindest einen Energieerzeuger (1), einen oder mehrere über eine Datenverbindung (6) mit dem Energieerzeuger (1) verbundene Energieverbraucher (2), welche Energiespeicher, insbesondere Warmwasserboiler (4), aufweisen, sowie Drittverbraucher aufweist, wobei eine durch den Energieerzeuger (1) zur Verfügung gestellte Energie und ein Energieverbrauch der Energieverbraucher (2) messbar und über die Datenverbindung (6) abgleichbar sind, **dadurch gekennzeichnet, dass** die Vorrichtung ein mit einer Datenverarbeitungseinrichtung (5), welche mit dem Energieerzeuger (1) und dem zumindest einen Energieverbraucher (2) verbunden ist, verbindbares Schaltelement aufweist, durch welches der Energiespeicher, insbesondere der Warmwasserboiler (4), aktivierbar ist, um dann, wenn eine Energieproduktion des Energieerzeugers (1) den Energieverbrauch durch die Energieverbraucher (2) übersteigt, den Energiespeicher, insbesondere den Warmwasserboiler (4), bei den verbundenen Energieverbrauchern (2) aktivieren zu können, sodass überschüssige elektrische Energie in eine andere Energieform, insbesondere in thermische Energie, umgewandelt und bei den Energieverbrauchern (2) gespeichert werden kann, um den aktuelle Energieverbrauch durch die verbundenen Energieverbrauchern (2) an die durch den Energieerzeuger (1) zur Verfügung gestellte Energie anzupassen.

12. Vorrichtung nach Anspruch 11, **dadurch gekennzeichnet, dass** das Schaltelement über eine bidirektionale Datenverbindung (6) mit der Datenverarbeitungseinrichtung (5) verbindbar ist.

13. Vorrichtung nach Anspruch 11 oder 12, **dadurch gekennzeichnet, dass** das Schaltelement ein Modem für eine drahtlose Datenverbindung (6) mit der Datenverarbeitungseinrichtung (5) aufweist.

14. Vorrichtung nach einem der Ansprüche 11 bis 13, **dadurch gekennzeichnet, dass** das Schaltelement einen Schacht zur Aufnahme einer Sim-Karte oder eine fix eingelötete Sim-Karte aufweist.

15. Vorrichtung nach einem der Ansprüche 11 bis 14, **dadurch gekennzeichnet, dass** eine Ausleseeinrichtung für ein Smart-Meter (3) vorgesehen ist, welche mit der Datenverarbeitungseinrichtung (5) verbindbar ist, um einen aktuellen Energieverbrauch eines Energieerzeugers (1), an welchem das Smart-Meter (3) installiert ist, an die Datenverarbeitungseinrichtung (5) übermitteln zu können.

16. Vorrichtung nach einem der Ansprüche 11 bis 15, **dadurch gekennzeichnet, dass** ein Energieerzeuger (1) mit einer Photovoltaikanlage vorgesehen ist, wobei ein Wechselrichter (8) der Photovoltaikanlage mit der Datenverarbeitungseinrichtung (5) verbindbar ist.

17. Vorrichtung nach einem der Ansprüche 11 bis 16, **dadurch gekennzeichnet, dass** die Datenverarbeitungseinrichtung (5) vorgesehen und zur Aktivierung und Deaktivierung von einem oder mehreren Energiespeichern, insbesondere Warmwasserboilern (4), des zumindest einen Energieverbrauchers (2) über die Datenverbindung (6) mit einem oder mehreren Schaltelementen verbunden ist, welche mit jeweils zumindest einem Energiespeicher, insbesondere Warmwasserboiler (4), verbunden sind, um die Energiespeicher, insbesondere Warmwasserboiler (4), zu aktivieren und zu deaktivieren.

18. Vorrichtung nach einem der Ansprüche 11 bis 17, **dadurch gekennzeichnet, dass** in zumindest einem Energiespeicher, insbesondere einem Warmwasserboiler (4) ein Sensor zur Temperatur- und/oder Füllstandsmessung vorgesehen und mit der Datenverarbeitungseinrichtung (5) verbunden ist, um basierend auf Temperatur und/oder Füllstand einzelne Energiespeicher, insbesondere Warmwasserboiler (4), aktivieren bzw. deaktivieren zu können.
